# EUROPEAN PATENT APPLICATION

(11) **EP 4 321 485 A1**
(43) Date of publication of application: **14.02.2024**
(21) Application number: 22784505.4
(22) Date of filing: 23.03.2022
(51) Int. Cl.: C01G 19/00, H01B 1/06, H01B 1/10, H01B 13/00, H01M 10/052, H01M 10/054, H01M 10/0562, H01M 10/058

(54) **METHOD FOR PRODUCING SOLID ELECTROLYTE PARTICLES AND METHOD FOR PRODUCING ALL-SOLID-STATE BATTERY**

(30) Priority: 07.04.2021 JP 2021065250
(71) Applicant: MITSUBISHI GAS CHEMICAL COMPANY, INC., Chiyoda-ku Tokyo 100-8324 (JP)
(72) Inventor: KONYA, Masashi, Niigata-shi, Niigata 950-3112 (JP); TAMAI, Kazuki, Niigata-shi, Niigata 950-3112 (JP)
(74) Representative: Vossius & Partner Patentanwälte Rechtsanwälte mbB
(86) International application number: PCT/JP2022/013407
(87) International publication number: WO 2022/215520

(57) **Abstract**

The present invention is able to provide a method for producing solid electrolyte particles, the method comprising a step (1) in which solid electrolyte particles are precipitated by bringing a good solvent solution and a poor solvent into contact with each other, the good solvent solution containing a good solvent and a solid electrolyte that contains Sn, S and at least one of an alkali metal element and an alkaline earth metal element. The present invention is also able to provide a method for producing an all-solid-state battery, the method comprising a step in which an all-solid-state battery is formed by stacking a solid electrolyte layer, which is formed using solid electrolyte particles produced by the above-described method, a positive electrode layer and a negative electrode layer.

## Description

### TECHNICAL FIELD

The present invention relates to a method for producing solid electrolyte particles and a method for producing an all-solid-state battery.

### BACKGROUND ART

Conventionally, non-aqueous electrolyte secondary batteries have been widely used in applications including portable information terminals and portable electronic equipments. For electrolytes to be used for non-aqueous electrolyte secondary batteries, a flammable organic solvent is usually used as an electrolytic solution. For this reason, non-aqueous electrolyte secondary batteries have a strong exterior so that an organic solvent does not leak out, and usually have a function against a risk at the time when an electrolytic solution leaks out. Thus, there is a limitation on structures of devices.

Moreover, recently, the range of applications of non-aqueous electrolyte secondary batteries has been widened to movable bodies such as electric vehicles, hybrid electric vehicles and aircrafts, stationary power storage systems, etc., and high-capacity non-aqueous electrolyte secondary batteries are desired. For high-capacity non-aqueous electrolyte secondary batteries, higher safety is desired.

Under the above-described circumstances, attention has been given to non-aqueous electrolyte secondary batteries obtained by using a solid electrolyte, in which no flammable organic solvent is used, and which can realize high safety.

In non-aqueous electrolyte secondary batteries obtained by using a solid electrolyte, in general, the interface resistance between an electrolyte layer and an electrode layer is relatively high when compared to the case of using an electrolytic solution. Therefore, conventionally, methods for reducing the interface resistance between an electrolyte layer and an electrode layer have been examined.

For example, Patent Document 1 describes an invention related to sulfide-based solid electrolyte fine particles, which contain a sulfur element, a lithium element and a phosphorus element as main components, and which have an average particle diameter of 0.1 to 10 µm.

Patent Document 1 describes that thinning of an electrolyte layer and reduction in the interface resistance between an electrolyte layer and an electrode agent can be expected by microparticulating a solid electrolyte.

Further, as methods for producing the aforementioned sulfide-based solid electrolyte fine particles, Patent Document 1 describes: a method for multi-stage pulverization of sulfide-based solid electrolyte coarse particles in a non-aqueous solvent; a method for single-stage pulverization of sulfide-based solid electrolyte coarse particles in a non-aqueous solvent to which a dispersion stabilizer is added; and a method for dry pulverization of sulfide-based solid electrolyte coarse particles using a jet pulverizer.

By the way, as solid electrolytes, sulfide-based solid electrolytes and oxide-based solid electrolytes are known. Among them, special attention has been recently given to tin (Sn)-containing sulfide-based solid electrolytes because they exhibit high ionic conductivity and high water resistance.

### PRIOR ART DOCUMENTS

### PATENT DOCUMENTS

Patent Document 1: JP 2008-4459A

### SUMMARY OF THE INVENTION

### PROBLEMS TO BE SOLVED BY THE INVENTION

According to the method described in Patent Document 1, a sulfide-based solid electrolyte can be microparticulated by means of pulverization. However, it was found that there is a case where a tin (Sn)-containing sulfide-based solid electrolyte is decomposed by energy at the time of pulverization. Accordingly, a method for producing a microparticulated tin (Sn)-containing sulfide-based solid electrolyte has been desired.

### MEANS FOR SOLVING THE PROBLEMS

The present inventors diligently made researches in order to solve the above-described problem. As a result, it was found that the above-described problem can be solved by a method of using a good solvent and a poor solvent relative to a tin (Sn)-containing sulfide-based solid electrolyte, and thus the present invention was achieved.

Specifically, the present invention includes, for example, aspects described below.
[1] A method for producing solid electrolyte particles, comprising a step (1) in which solid electrolyte particles are precipitated by bringing a good solvent solution and a poor solvent into contact with each other, the good solvent solution comprising a good solvent and a solid electrolyte that comprises an alkali metal element and/or an alkaline earth metal element, Sn and S.
[2] The method according to item [1], further comprising a step (2) for drying the solid electrolyte particles.
[3] The method according to item [1] or [2], wherein the temperature of the poor solvent at the time of the contact is a temperature that is equal to or higher than the boiling point of the good solvent.
[4] The method according to any one of items [1] to [3], wherein the concentration of the solid electrolyte in the good solvent solution is 1 to 30% by mass.
[5] The method according to any one of items [1] to [4], wherein the solid electrolyte comprises at least one of Li and Na.
[6] The method according to any one of items [1] to [5], wherein the solid electrolyte is a solid electrolyte formed of Li, Sn and S.
[7] The method according to any one of items [1] to [6], wherein the good solvent comprises an alcohol solvent.
[8] The method according to any one of items [1] to [7], wherein the poor solvent comprises a nitrile solvent.
[9] The method according to any one of items [1] to [8], wherein the solid electrolyte particles have an average particle diameter of 20 µm or less.
[10] A method for producing an all-solid-state battery, which comprises a step for layering a positive electrode layer, a negative electrode layer, and a solid electrolyte layer that is formed by using solid electrolyte particles produced by the method according to any one of items [1] to [9] to form an all-solid-state battery.

### ADVANTAGEOUS EFFECT OF THE INVENTION

According to the present invention, a method for producing a microparticulated tin (Sn)-containing sulfide-based solid electrolyte is provided. Accordingly, a solid electrolyte layer formed by using this can reduce the interface resistance to an electrode layer.

### DESCRIPTION OF EMBODIMENTS

Hereinafter, the present invention will be described in detail. Note that embodiments, etc. described below do not limit the present invention and can be modified variously within the range of the gist of the present invention.

### <Method for Producing Solid Electrolyte Powder>

The present invention relates to a method for producing solid electrolyte particles, comprising a step (1) in which solid electrolyte particles are precipitated by bringing a good solvent solution and a poor solvent into contact with each other, the good solvent solution comprising a good solvent and a solid electrolyte that comprises an alkali metal element and/or an alkaline earth metal element, a Sn element (Sn) and a S element (S).

According to the present invention, a microparticulated tin (Sn)-containing sulfide-based solid electrolyte can be produced. Specifically, a tin (Sn)-containing sulfide-based solid electrolyte (hereinafter sometimes referred to as just the "solid electrolyte") is firstly dissolved in a good solvent to obtain a good solvent solution. Next, the good solvent solution is brought into contact with a poor solvent to precipitate solid electrolyte particles (step (1)). According to the method of the present invention, the decomposition of a solid electrolyte is not caused or hardly caused because energy of pulverization or the like is not given to the solid electrolyte. Further, since solid electrolyte particles obtained have been microparticulated, for example, a solid electrolyte layer formed by using the particles reduces the interface resistance to an electrode agent. As a result, an all-solid-state battery having high-energy density and high output power can be produced. In this specification, "microparticulation" means particles having an average particle diameter of 20 µm or less.

Note that the above-described production method may further comprise a step (2) for drying the solid electrolyte particles.

Hereinafter, each step will be described in detail.

### [Step (1)]

The step (1) is a step in which solid electrolyte particles are precipitated by bringing a good solvent solution and a poor solvent into contact with each other, the good solvent solution comprising a good solvent and a solid electrolyte that comprises an alkali metal element and/or an alkaline earth metal element, a Sn element and a S element.

### (Good Solvent Solution)

The good solvent solution comprises a good solvent and a solid electrolyte that comprises an alkali metal element and/or an alkaline earth metal element, a Sn element and a S element. In addition, publicly-known additives may be suitably added thereto.

### Solid Electrolyte

The solid electrolyte comprises an alkali metal element and/or an alkaline earth metal element, a Sn element and a S element. That is, the solid electrolyte is a tin (Sn)-containing sulfide-based solid electrolyte. The tin (Sn)-containing sulfide-based solid electrolyte exhibits high ionic conductivity and high water resistance.

Examples of the alkali metal element include a lithium (Li) element, a sodium (Na) element, a potassium (K) element, a rubidium (Rb) element and a cesium (Cs) element.

Examples of the alkaline earth metal element include a beryllium (Be) element, a magnesium (Mg) element, a calcium (Ca) element, a strontium (Sr) element, a barium (Ba) element and a radium (Rd) element. In this specification, the "alkaline earth metal element" includes a beryllium (Be) element and a magnesium (Mg) element.

Among the above-described examples, the alkali metal element and the alkaline earth metal element are preferably a lithium (Li) element and/or a sodium (Na) element, and more preferably a lithium (Li) element. Specifically, in one embodiment, the solid electrolyte preferably comprises at least one of a lithium (Li) element and a sodium (Na) element, and more preferably comprises a lithium (Li) element. Regarding the alkali metal element and the alkaline earth metal element, one type may be contained solely, or two or more types may be contained in combination.

The solid electrolyte may further contain other elements. Examples of said other elements include a silicon (Si) element, a germanium (Ge) element, a phosphorus (P) element, a halogen element (a fluorine (F) element, a chlorine (Cl) element, a bromine (Br) element, an iodine (I) element) and an oxygen (O) element. Note that said other elements may be contained solely, or two or more of them may be contained in combination.

Examples of the solid electrolyte include a solid electrolyte formed of a Li element, a Sn element and a S element, a solid electrolyte formed of a Na element, a Sn element and a S element, a solid electrolyte formed of a K element, a Sn element and a S element, a solid electrolyte formed of a Be element, a Sn element and a S element, a solid electrolyte formed of a Mg element, a Sn element and a S element, a solid electrolyte formed of a Ca element, a Sn element and a S element, a solid electrolyte formed of a Li element, a Sn element, a Si element and a S element, a solid electrolyte formed of a Li element, a Sn element, a P element and a S element, a solid electrolyte formed of a Li element, a Sn element, a F element and a S element, a solid electrolyte formed of a Li element, a Sn element, a Cl element and a S element, a solid electrolyte formed of a Li element, a Sn element, a Br element and a S element, a solid electrolyte formed of a Li element, a Sn element, an O element and a S element, a solid electrolyte formed of a Na element, a Sn element, a Si element and a S element, a solid electrolyte formed of a Na element, a Sn element, a P element and a S element, a solid electrolyte formed of a Na element, a Sn element, a F element and a S element, a solid electrolyte formed of a Na element, a Sn element, a Cl element and a S element, a solid electrolyte formed of a Na element, a Sn element, a Br element and a S element, a solid electrolyte formed of a Na element, a Sn element, an O element and a S element, a solid electrolyte formed of a Li element, a Sn element, a Si element, a P element and a S element, a solid electrolyte formed of a Li element, a Ge element, a Sn element, a P element and a S element, a solid electrolyte formed of a Na element, a Ge element, a Sn element, a P element and a S element, and a solid electrolyte formed of a Na element, a Sn element, a Si element, a P element and a S element. Among the above-described examples of the solid electrolyte, preferred are a solid electrolyte formed of a Li element, a Sn element and a S element, a solid electrolyte formed of a Na element, a Sn element and a S element, a solid electrolyte formed of a Li element, a Sn element, a P element and a S element, a solid electrolyte formed of a Li element, a Sn element, a Si element, a P element and a S element, a solid electrolyte formed of a Li element, a Ge element, a Sn element, a P element and a S element, a solid electrolyte formed of a Na element, a Sn element, a P element and a S element, a solid electrolyte formed of a Na element, a Ge element, a Sn element, a P element and a S element, and a solid electrolyte formed of a Na element, a Sn element, a Si element, a P element and a S element, and more preferred are a solid electrolyte formed of a Li element, a Sn element and a S element, and a solid electrolyte formed of a Na element, a Sn element and a S element. The solid electrolyte is particularly preferably a solid electrolyte formed of a Li element, a Sn element and a S element.

Specific examples of the solid electrolyte include, but are not particularly limited to, Li₄SnS₄, Li₂SnS₃, Li₁₀SnP₂S₁₂, Li_{9.81}Sn_{0.81}P_{2.19}S₁₂, Li₁₀(Ge_{0.5}Sn_{0.5})P₂S₁₂, Li₁₀(Si_{0.5}Sn_{0.5})P₂S₁₂, Li_{3.45}[Sn_{0.09}Si_{0.36}]P_{0.55}S₄, Na₄SnS₄, Na₄SnS₄, Na₂SnS₃, Na₁₀SnP₂S₁₂, Na_{9.81}Sn_{0.81}P_{2.19}S₁₂, Na₁₀(Ge_{0.5}Sn_{0.5})P₂S₁₂, Na₁₀(Si_{0.5}Sn_{0.5})P₂S₁₂ and Na_{3.45}[Sn_{0.09}Si_{0.36}]P_{0.55}S₄. Among the above-described examples of the solid electrolyte, preferred are Li₄SnS₄, Li₂SnS₃, Na₄SnS₄, Na₄SnS₄ and Na₂SnS₃, and more preferred are Li₄SnS₄ and Na₄SnS₄. The solid electrolyte is even more preferably Li₄SnS₄. Note that it is sufficient when the above-described specific solid electrolytes have the above-described compositions, and the solid electrolytes may be constituted of a single crystal structure, or may be constituted of a combination of different crystal structures. For example, a solid electrolyte having a composition of Li₄SnS₄ may be constituted of a combination of Li₄Sn₂S₆ and Li₂S with different crystal structures.

The method for producing the solid electrolyte is not particularly limited, and a publicly-known method can be suitably employed. Examples of the method include: a mechanical milling method which includes subjecting a raw material composition to mechanical milling to prepare an amorphized precursor and heating the amorphized precursor; and a liquid phase method which includes preparing a precursor in a solution, removing a solvent and heating the precursor. Among them, the mechanical milling method is preferably employed for producing the solid electrolyte.

Raw materials to be used for producing the solid electrolyte are not particularly limited, but are preferably raw materials whose constituents are selected from the group consisting of an alkali metal element, an alkaline earth metal element, a Sn element and a S element such as lithium sulfide (Li₂S), sodium sulfide (Na₂S), magnesium sulfide (MgS), strontium sulfide (SrS), elemental sulfur, tin sulfide (SnS) and tin (Sn). Among them, more preferred are raw materials whose constituents are selected from the group consisting of an alkali metal element, a Sn element and a S element such as lithium sulfide (Li₂S), sodium sulfide (Na₂S), elemental sulfur, tin sulfide (SnS) and tin (Sn).

In the case where the solid electrolyte contains other elements, raw materials containing said other elements are preferably used. Specific examples thereof include: a Si element-containing raw material such as silicon sulfide (SiS₂), silicon (Si) and silicon dioxide (SiO₂); a Ge element-containing raw material such as germanium sulfide (GeS₂), germanium (Ge) and germanium dioxide (GeO₂); a P element-containing raw material such as elemental phosphorus (P), diphosphorus trisulfide (P₂S₃), diphosphorus pentasulfide (P₂S₅), phosphorus pentachloride (PCl₅), phosphorus tribromide (PBr₃) and phosphorus pentabromide (PBr₅); a halogen element-containing raw material such as lithium bromide (LiBr), sodium bromide (NaBr), lithium iodide (LiI), sodium iodide (NaI), magnesium iodide (MgI₂), phosphorus pentachloride (PCl₅), phosphorus tribromide (PBr₃) and phosphorus pentabromide (PBr₅); and an O element-containing raw material such as lithium oxide (Li₂O), lithium oxide (Na₂O), phosphorus pentoxide (P₂O₅), silicon dioxide (SiOz), germanium dioxide (GeO₂), tin (II) oxide (SnO), tin (IV) oxide (SnO₂) and tin (IV) oxide (SnO₃).

These raw materials of the solid electrolyte may be used solely, or two or more of them may be used in combination.

The content of the solid electrolyte in the good solvent solution is preferably 1 to 30% by mass, more preferably 5 to 30% by mass, and even more preferably 15 to 30% by mass relative to the total mass of the good solvent. When the content of the solid electrolyte is 1% by mass or more, it is preferred on the points that the amount of the solvent to be used can be reduced, that solid electrolyte particles microparticulated at a higher level can be obtained, etc. Meanwhile, when the content of the solid electrolyte is 30% by mass or less, it is preferred because the amount of the solid electrolyte undissolved can be reduced.

### Good Solvent

The good solvent dissolves at least some of the solid electrolyte. In this specification, the "good solvent" means a solvent in which the solubility of the solid electrolyte at 25°C is 1 mg/mL or more.

The good solvent is not particularly limited, and examples thereof include an alcohol solvent, a carboxylic acid solvent, a lactam-based solvent and water.

The alcohol solvent is not particularly limited, and examples thereof include methanol (boiling point: 64.7°C), ethanol (boiling point: 78.4°C), propanol (boiling point: 97°C), isopropyl alcohol (boiling point: 82.5°C) and 1-butanol (boiling point: 117.7°C).

The carboxylic acid solvent is not particularly limited, and examples thereof include formic acid (boiling point: 100.8°C) and acetic acid (boiling point: 118°C).

The lactam-based solvent is not particularly limited, and examples thereof include N-methylpyrrolidone (NMP) (boiling point: 202°C).

Among the above-described examples, the good solvent preferably contains the alcohol solvent, more preferably contains at least one selected from the group consisting of methanol, ethanol, propanol and isopropyl alcohol, and even more preferably contains methanol. Note that the above-described good solvents may be used solely, or two or more of them may be used in combination.

### (Poor Solvent)

The poor solvent is a solvent in which the solubility of the solid electrolyte is low, and when the solid electrolyte dissolved comes into contact with the poor solvent, the solid electrolyte is precipitated. In this specification, the "poor solvent" means a solvent in which the solubility of the solid electrolyte at 25°C is less than 1 mg/mL.

Examples of the poor solvent include an aliphatic hydrocarbon solvent, an aromatic hydrocarbon solvent, a ketone solvent, an ether solvent, an ester solvent, a nitrile solvent, a halogen solvent, an amide solvent and a sulfoxide solvent.

The aliphatic hydrocarbon solvent is not particularly limited, and examples thereof include hexane (boiling point: 69°C), heptane (boiling point: 98.4°C) and octane (boiling point: 125.6°C).

The aromatic hydrocarbon solvent is not particularly limited, and examples thereof include benzene (boiling point: 80.1°C), toluene (boiling point: 110.6°C) and xylene (boiling point: 139°C).

The ketone solvent is not particularly limited, and examples thereof include acetone (boiling point: 56°C) and methyl ethyl ketone (MEK) (boiling point: 79.6°C).

The ether solvent is not particularly limited, and examples thereof include diethyl ether (boiling point: 34.6°C), tetrahydrofuran (THF) (boiling point: 66°C) and 1,4-dioxane (boiling point: 101°C).

The ester solvent is not particularly limited, and examples thereof include methyl acetate (boiling point: 57.1°C), ethyl acetate (boiling point: 77.1°C), propyl acetate (boiling point: 102°C), methyl propionate (boiling point: 79.8°C) and ethyl propionate (boiling point: 99°C).

The nitrile solvent is not particularly limited, and examples thereof include acetonitrile (boiling point: 82°C), isobutyronitrile (boiling point: 108°C) and benzonitrile (boiling point: 191°C).

The halogen-based solvent is not particularly limited, and examples thereof include methylene chloride (boiling point: 39.6°C) and chloroform (boiling point: 61.2°C).

The amide solvent is not particularly limited, and examples thereof include N,N-dimethylformamide (DMF) (boiling point: 153°C).

Examples of the sulfoxide solvent include dimethyl sulfoxide (DMSO) (boiling point: 189°C).

Among the above-described examples, the poor solvent preferably contains at least one of the nitrile solvent and the ester solvent, more preferably contains the nitrile solvent, and even more preferably contains acetonitrile. Note that the above-described poor solvents may be used solely, or two or more of them may be used in combination.

The boiling point of the poor solvent is preferably higher than the boiling point of the good solvent. As described later, when the boiling point of the poor solvent is higher than the boiling point of the good solvent, the temperature of the poor solvent at the time of the contact can be set to be higher than the boiling point of the good solvent. As a result, when the good solvent solution is brought into contact with the poor solvent, some or all of the good solvent is immediately volatilized and the chance of contact between the solid electrolyte and the poor solvent is further increased. For this reason, the precipitation rate of the solid electrolyte can be further increased. As a result, it is possible to obtain solid electrolyte particles microparticulated at a higher level with a smaller average particle diameter. The difference between the boiling point of the poor solvent and the boiling point of the good solvent (boiling point of poor solvent - boiling point of good solvent) is preferably 5°C or more, more preferably 10°C or more, and even more preferably 15°C or more. The upper limit of the difference between the boiling point of the poor solvent and the boiling point of the good solvent is not particularly limited, but it is preferably 200°C or less, more preferably 160°C or less, and even more preferably 100°C or less. That is, according to one embodiment, the difference between the boiling point of the poor solvent and the boiling point of the good solvent (boiling point of poor solvent - boiling point of good solvent) is preferably 10 to 200°C, more preferably 10 to 160°C, even more preferably 15 to 160°C, and particularly preferably 15 to 100°C.

The combination of the good solvent and the poor solvent is not particularly limited, and examples thereof include methanol-heptane (boiling point difference: 33.7°C), methanol-octane (boiling point difference: 60.9°C), methanol-benzene (boiling point difference: 15.4°C), methanol-methyl ethyl ketone (MEK) (boiling point difference: 14.9°C), methanol-1,4-dioxane (boiling point difference: 36.3°C), methanol-propyl acetate (boiling point difference: 37.3°C), methanol-methyl propionate (boiling point difference: 15.1°C), methanol-ethyl propionate (boiling point: 34.3°C), methanol-acetonitrile (boiling point difference: 17.3°C), methanol-benzonitrile (boiling point difference: 126.3°C), methanol-N,N-dimethylfoumamide (DMF) (boiling point difference: 88.3°C), methanol-dimethylsulfoxide (DMSO) (boiling point difference: 124.3°C), ethanol-heptane (boiling point difference: 20°C), ethanol-octane (boiling point difference: 47.2°C), ethanol-toluene (boiling point difference: 32.2°C), ethanol-1,4-dioxane (boiling point difference: 22.6°C), ethanol-propyl acetate (boiling point difference: 23.6°C), ethanol-ethyl propionate (boiling point difference: 20.6°C), ethanol-benzonitrile (boiling point difference: 112.6°C), ethanol-N,N-dimethylformamide (DMF) (boiling point difference: 74.6°C) and ethanol-dimethylsulfoxide (DMSO) (boiling point difference: 110.6°C). Among the above-described examples of the combination of the good solvent and the poor solvent, preferred are methanol-1,4-dioxane (boiling point difference: 36.3°C), methanol-propyl acetate (boiling point difference: 37.3°C), methanol-methyl propionate (boiling point difference: 15.1°C), methanol-ethyl propionate (boiling point: 34.3°C), methanol-acetonitrile (boiling point difference: 17.3°C), ethanol-1,4-dioxane (boiling point difference: 22.6°C), ethanol-propyl acetate (boiling point difference: 23.6°C) and ethanol-ethyl propionate (boiling point difference: 20.6°C), and more preferred is methanol-acetonitrile (boiling point difference: 17.3°C).

The volume ratio of the amount of the poor solvent relative to the amount of the good solvent used in the good solvent solution (amount (volume) of poor solvent/amount (volume) of good solvent) is preferably 3 or more, more preferably 5 or more, and even more preferably 10 or more.

### (Contact)

The good solvent solution is brought into contact with the poor solvent to precipitate solid electrolyte particles. The contact method is not particularly limited, and examples thereof include a method for adding the poor solvent into the good solvent solution and a method for adding the good solvent solution into the poor solvent.

In the method for adding the poor solvent into the good solvent solution, the content ratio of the poor solvent is increased with the addition of the poor solvent, and the chance of contact between the solid electrolyte in the good solvent solution and the poor solvent is increased, and accordingly solid electrolyte particles are precipitated. In this regard, the method for adding the poor solvent is not particularly limited. The poor solvent may be added dropwisely or all at once.

In the method for adding the good solvent solution into the poor solvent, when the good solvent solution is added, the environment surrounding the solid electrolyte in the good solvent solution immediately becomes one in which a large amount of the poor solvent exists around the solid electrolyte, and the solid electrolyte is precipitated by contact between the solid electrolyte and the poor solvent. In this regard, the method for adding the good solvent is not particularly limited, and it may be added dropwisely or all at once. However, from the viewpoint of obtaining solid electrolyte particles microparticulated at a higher level, adding dropwisely is preferred.

Among the above-described examples, the contact method is preferably the method for adding the good solvent solution into the poor solvent. The method for adding the good solvent solution into the poor solvent is preferred because the precipitation rate of the solid electrolyte is increased since the chance of contact between the solid electrolyte and the poor solvent at the time of the contact is high and as a result, it is possible to obtain solid electrolyte particles microparticulated at a higher level with a smaller average particle diameter. Specifically, according to a preferred embodiment, the method for producing solid electrolyte particles comprises a step (1) in which a good solvent solution, which comprises a good solvent and a solid electrolyte that comprises at least a Li element, a Sn element and a S element, is added to a poor solvent to precipitate solid electrolyte particles.

Though the temperature at the time of the contact varies depending on the types of the good solvent and poor solvent to be used, the temperature is preferably 5 to 200°C, more preferably 15 to 175°C, even more preferably 30 to 150°C, and particularly preferably 50 to 120°C.

The pressure at the time of the contact is not particularly limited, but it is preferably 1500 hPa or lower, more preferably 10⁻² hPa to 1024 hPa, and even more preferably 1 hPa to 300 hPa. When the pressure at the time of the contact is within the above-described range, it is preferred because, as described later, in the case where at least some of the good solvent is removed by heating at the time of the contact, the temperature at the time of the contact can be decreased and accordingly decomposition and elution of the solid electrolyte can be suppressed.

In one embodiment, at least some of the good solvent is preferably removed at the time of the contact. By removing at least some of the good solvent at the time of the contact, the chance of contact between the solid electrolyte and the poor solvent solution is further increased and the precipitation rate of the solid electrolyte is further increased. As a result, it is possible to obtain solid electrolyte particles microparticulated at a higher level with a smaller average particle diameter. Examples of the method for removing at least some of the good solvent at the time of the contact include a method of heating; a method of reducing the pressure; a method utilizing membrane separation such as a pervaporation method and a membrane distillation method; a method of adsorbing the good solvent such as selective adsorption; and a combination thereof. Among them, a method of heating at the time of the contact is preferred. In this regard, in one embodiment, since the boiling point of the poor solvent is higher than the boiling point of the good solvent, the temperature of the poor solvent at the time of the contact between the good solvent solution and the poor solvent is preferably a temperature that is equal to or higher than the boiling point of the good solvent. For example, when the good solvent solution is added into the poor solvent heated to a temperature that is equal to or higher than the boiling point of the good solvent, some or all of the good solvent can be volatilized immediately after the addition of the good solvent solution. Accordingly, the chance of contact between the solid electrolyte and the poor solvent is further increased, and the precipitation rate of the solid electrolyte can be further increased. As a result, it is possible to obtain solid electrolyte particles microparticulated at a higher level with a smaller average particle diameter. Note that the temperature of the poor solvent is preferably equal to or lower than the boiling point of the poor solvent. Further, in the case where the temperature of the poor solvent is set to be equal to or near the boiling point of the poor solvent, the poor solvent is preferably refluxed. Specifically, according to a preferred embodiment of the present invention, the method for producing solid electrolyte particles comprises a step (1) in which a good solvent solution, which comprises a good solvent and a solid electrolyte that comprises at least a Li element, a Sn element and a S element, is added to a poor solvent at a temperature that is equal to or higher than the boiling point of the good solvent (preferably at a temperature that is equal to or higher than the boiling point of the good solvent and at the same time, equal to or lower than the boiling point of the poor solvent) to precipitate solid electrolyte particles.

After the step (1), by performing filtration or the like prior to the step (2), solid electrolyte particles, and at least some of the poor solvent or at least some of the poor solvent and the good solvent can be removed.

### [Step (2)]

The step (3) is a step of drying the solid electrolyte particles. By drying, the poor solvent, the good solvent, etc. that may remain in the solid electrolyte particles can be removed.

### (Drying)

The drying temperature is not particularly limited as long as it is a temperature at which the remaining poor solvent or the remaining poor solvent and good solvent can be removed, but the drying temperature is preferably 100°C or higher, more preferably 120 to 300°C, and even more preferably 150 to 250°C.

The pressure at the time of drying is not particularly limited, but it is preferably 500 hPa or lower, more preferably 10⁻² hPa to 200 hPa, and even more preferably 1 hPa to 50 hPa. When the pressure at the time of drying is within the above-described range, it is preferred because the remaining poor solvent or the remaining poor solvent and good solvent can be sufficiently removed.

### (Solid Electrolyte Particles)

Since the solid electrolyte particles have been microparticulated, for example, a solid electrolyte layer formed by using the particles reduces the interface resistance to an electrode agent. As a result, an all-solid-state battery having high-energy density and high output power can be produced.

The average particle diameter of the solid electrolyte particles is preferably 20 µm or less, more preferably 10 µm or less, even more preferably 7.5 µm or less, particularly preferably 5 µm or less, and most preferably 0.8 µm or less. From the viewpoint of handleability, the average particle diameter of the solid electrolyte particles is preferably 0.1 µm or more. In this specification, the "average particle diameter" means a median diameter (D₅₀) and is measured by the method described in the Examples.

### <Method for Producing All-Solid-State Battery>

According to one aspect of the present invention, a method for producing an all-solid-state battery is provided. The production method comprises a step for layering a positive electrode layer, a negative electrode layer, and a solid electrolyte layer that is formed by using solid electrolyte particles produced by the above-described method to form an all-solid-state battery. The "all-solid-state battery" means a battery in which a solid electrolyte is used as an electrolyte. The all-solid-state battery usually comprises a positive electrode layer, a solid electrolyte layer and a negative electrode layer.

The solid electrolyte layer is formed by using solid electrolyte particles produced by the above-described method. In this regard, the solid electrolyte layer may be produced by using only the solid electrolyte particles, or may be produced by additionally using another solid electrolyte in combination. Examples of said another solid electrolyte include a tin-containing sulfide-based solid electrolyte produced by another method, a tin-free sulfide-based solid electrolyte, an oxide-based solid electrolyte and a complex hydride solid electrolyte. As said another solid electrolyte, these materials may be used solely, or two or more of them may be used in combination.

Since the solid electrolyte particles produced by the above-described method are a tin (Sn)-containing sulfide-based solid electrolyte, a solid electrolyte layer obtained can exhibit high ionic conductivity and high water resistance. Further, since the solid electrolyte particles produced by the above-described method have been microparticulated, a solid electrolyte layer obtained reduces the interface resistance to an electrode agent and contributes to obtaining high-energy density and high output power of the all-solid-state battery.

Further, the positive electrode layer and/or the negative electrode layer may be formed by using the solid electrolyte particles produced by the above-described method. In the case where the positive electrode layer or negative electrode layer is produced by using the solid electrolyte particles, they are used in combination with a publicly-known positive electrode active material or negative electrode active material for lithium ion secondary batteries to form the positive electrode layer or negative electrode layer. In this regard, the quantitative ratio of the solid electrolyte particles to be contained in the positive electrode layer or negative electrode layer is not particularly limited. Note that the positive electrode layer and the negative electrode layer may contain a publicly-known current collector, conduction assisting agent, binder, etc.

The all-solid-state battery is prepared by forming and laminating the above-described positive electrode layer, solid electrolyte layer and negative electrode layer, and the forming method and laminating method for the respective layers are not particularly limited.

Examples thereof include: a method in which a solid electrolyte and/or an electrode active material are dispersed in a solvent to provide a slurry-like mixture, which is applied by a doctor blade, spin coating or the like and subjected to rolling to form a film; a gas phase method in which film forming and lamination are performed by using a vacuum deposition method, ion plating method, sputtering method, laser ablation method or the like; and a pressing method in which powder is formed by hot pressing or cold pressing (not heating) and laminated.

Since the solid electrolyte particles produced by the above-described method are tin-containing sulfide-based solid electrolyte particles and are relatively soft, it is particularly preferred to prepare the all-solid-state battery by forming the respective layers by means of the pressing method and laminating the layers. As the pressing method, there are hot pressing in which heating is performed and cold pressing in which heating is not performed, but forming the layers can be sufficiently carried out even by means of cold pressing.

### EXAMPLES

Hereinafter, the present invention will be more specifically described by way of examples, but the present invention is not limited to the examples.

### [Production Example]

A solid electrolyte having a composition of Li₄SnS₄ was produced by the method described below.

In a glovebox under argon atmosphere, Li₂S (purity: 99.8%, manufactured by Sigma-Aldrich) and SnS₂ (purity: 99.9%, manufactured by Kojundo Chemical Laboratory Co., Ltd.) were weighed so as to provide the stoichiometric ratio of Li₄SnS₄, and mixing was carried out for 15 minutes using an agate mortar. 1.0 g of the obtained mixture and 15 zirconia balls (outer diameter ϕ: 10 mm) were put into a 45-mL zirconia pot, and the pot was sealed. The zirconia pot was fixed to a planetary ball mill (manufactured by Fritsch Japan Co., Ltd.), and the ball mill treatment was carried out at 370 rpm for 4 hours. The obtained precursor was calcined at 450°C for 8 hours, thereby producing a solid electrolyte having a composition of Li₄SnS₄.

### (Preparation of Good Solvent Solution)

In a glovebox under argon atmosphere, 1 g of Li₄SnS₄ was added to 20 mL of methanol (super dehydrated grade, boiling point: 64°C, manufactured by FUJIFILM Wako Pure Chemical Corporation) as a good solvent, and mixing was carried out at room temperature (25°C) for 24 hours. Note that Li₄SnS₄ was gradually dissolved. Insoluble matters derived from the production process of Li₄SnS₄ contained in the obtained solution were filtered using a membrane filter (polytetrafluoroethylene (PTFE), pore size: 1.0 µm), thereby obtaining a good solvent solution in which Li₄SnS₄ was dissolved. The concentration of Li₄SnS₄ in the good solvent solution was 6% by mass.

### (Contact)

To heated acetonitrile as a poor solvent, the good solvent solution was added to produce Li₄SnS₄ particles.

Specifically, in a glovebox under argon atmosphere, 120 mL of super-dehydrated acetonitrile was put into a 300-mL flask, and the acetonitrile was brought into a total reflux state by using a distillation apparatus. At this time, the temperature of the acetonitrile was 82°C (boiling point).

20 mL of the good solvent solution prepared as described above was added dropwise to acetonitrile using a dropping funnel. Methanol that was the solvent of the alcohol solution added dropwisely was volatilized after it was added dropwisely, and Li₄SnS₄ particles were precipitated in acetonitrile.

When the column top temperature of the distillation apparatus reached about 64°C (boiling point of methanol), adding dropwisely was stopped and a distillate was collected. Using the distillation apparatus, acetonitrile was brought into a total reflux state again and adding the good solvent solution dropwisely was resumed.

The time point at which the column top temperature reached 81°C (boiling point of acetonitrile: 82°C) after the completion of adding the good solvent solution dropwisely was determined as the termination point of distillation.

The obtained acetonitrile suspension of the Li₄SnS₄ particles was used as a measurement sample, and the particle size distribution was measured using a laser scattering/diffraction type particle size distribution measuring apparatus (Misrotrac MT3000EXII manufactured by Nikkiso Co., Ltd.) to determine the average particle diameter (D₅₀) of the Li₄SnS₄ particles.

The result showed that the average particle diameter (D₅₀) of the Li₄SnS₄ particles was 1.0 µm.

### [Example 2]

### (Preparation of Good Solvent Solution)

A good solvent solution was prepared in a manner similar to that in Example 1, except that 150 mg of Li₄SnS₄ and 5 mL of methanol were used. The concentration of Li₄SnS₄ in the good solvent solution was 4% by mass.

### (Contact)

To 200 mL of unheated acetonitrile (25°C), 5 mL of the good solvent solution was added dropwise to precipitate Li₄SnS₄ particles in acetonitrile. Note that the Li₄SnS₄ particles precipitated from the good solvent solution immediately after it was added dropwisely.

The obtained acetonitrile suspension of the Li₄SnS₄ particles was used as a sample to measure the average particle diameter (D₅₀) of the Li₄SnS₄ particles in a manner similar to that in Example 1, and it was 5.7 µm.

### [Example 3]

### (Preparation of Good Solvent Solution)

A good solvent solution was prepared in a manner similar to that in Example 1, except that 500 mg of Li₄SnS₄ and 5 mL of methanol were used. The concentration of Li₄SnS₄ in the good solvent solution was 13% by mass.

### (Contact)

Li₄SnS₄ particles were precipitated in acetonitrile in a manner similar to that in Example 2. The average particle diameter (D₅₀) of the Li₄SnS₄ particles was measured in a manner similar to that in Example 1, and it was 7.8 µm.

### [Example 4]

### (Preparation of Good Solvent Solution)

A good solvent solution was prepared in a manner similar to that in Example 1, except that 1.0 g of Li₄SnS₄ and 5 mL of methanol were used. The concentration of Li₄SnS₄ in the good solvent solution was 25% by mass.

### (Contact)

Li₄SnS₄ particles were precipitated in acetonitrile in a manner similar to that in Example 2. The average particle diameter (D₅₀) of the Li₄SnS₄ particles was measured in a manner similar to that in Example 1, and it was 0.5 µm.

The results obtained in Examples 1 to 4 are shown in Table 1 below.

**Table 1**

| | Good Solvent Solution | Poor Solvent | Average Particle Diameter of Li₄SnS₄ Particles (µm) |
|---|---|---|---|
| | Concentration of Li₄SnS₄ (% by mass) | Temperature at Time of Contact (°C) | |
| Example 1 | 6 | 82 | 1.0 |
| Example 2 | 4 | 25 | 5.7 |
| Example 3 | 13 | 25 | 7.8 |
| Example 4 | 25 | 25 | 0.5 |

It is understood from the results in Table 1 that the Li₄SnS₄ particles produced according to the methods of Examples 1 to 4 have been microparticulated.

## Claims

1. A method for producing solid electrolyte particles, comprising a step (1) in which solid electrolyte particles are precipitated by bringing a good solvent solution and a poor solvent into contact with each other, the good solvent solution comprising a good solvent and a solid electrolyte that comprises an alkali metal element and/or an alkaline earth metal element, Sn and S.

2. The method according to claim 1, further comprising a step (2) for drying the solid electrolyte particles.

3. The method according to claim 1 or 2, wherein the temperature of the poor solvent at the time of the contact is a temperature that is equal to or higher than the boiling point of the good solvent.

4. The method according to any one of claims 1 to 3, wherein the concentration of the solid electrolyte in the good solvent solution is 1 to 30% by mass.

5. The method according to any one of claims 1 to 4, wherein the solid electrolyte comprises at least one of Li and Na.

6. The method according to any one of claims 1 to 5, wherein the solid electrolyte is a solid electrolyte formed of Li, Sn and S.

7. The method according to any one of claims 1 to 6, wherein the good solvent comprises an alcohol solvent.

8. The method according to any one of claims 1 to 7, wherein the poor solvent comprises a nitrile solvent.

9. The method according to any one of claims 1 to 8, wherein the solid electrolyte particles have an average particle diameter of 20 µm or less.

10. A method for producing an all-solid-state battery, which comprises a step for layering a positive electrode layer, a negative electrode layer, and a solid electrolyte layer that is formed by using solid electrolyte particles produced by the method according to any one of claims 1 to 9 to form an all-solid-state battery.
